(19) Europäisches Patentamt

European Patent Office

Office européen des brevets

(11) Veröffentlichungsnummer: **0 498 218 A2**

# EUROPÄISCHE PATENTANMELDUNG

(21) Anmeldenummer: **92101061.7**

(22) Anmeldetag: **23.01.92**

(51) Int. Cl.⁵: **C08G 18/08**, C08G 18/42, C09J 175/04

(30) Priorität: **05.02.91 DE 4103347**

(43) Veröffentlichungstag der Anmeldung:
**12.08.92 Patentblatt 92/33**

(84) Benannte Vertragsstaaten:
**DE FR GB IT NL**

(71) Anmelder: **BAYER AG**

**W-5090 Leverkusen 1 Bayerwerk(DE)**

(72) Erfinder: **Hänsel, Eduard, Dr.**
**Florastrasse 18**
**W-4018 Langenfeld(DE)**
Erfinder: **Meckel, Walter, Dr.**
**Zonserstrasse 9**
**W-4040 Neuss(DE)**
Erfinder: **Münzmay, Thomas, Dr.**
**Goethestrasse 57d**
**W-4047 Dormagen(DE)**

(54) **Wässrige Polyurethan-Dispersionen und ihre Verwendung als Kaschierklebstoffe.**

(57) Die vorliegende Erfindung betrifft wäßrige Polyurethan-Dispersionen auf Basis
A) einer Carbonsäuregruppen-haltigen höhermolekularen Polyhydroxylkomponente,
B) gegebenenfalls einer weiteren höhermolekularen Polyhydroxylkomponente die weitgehend frei von Carbonsäuregruppen ist,
C) gegebenenfalls niedermolekularen Polyhydroxylverbindungen als Kettenverlängerungsmitteln,
D) organischen Polyisocyanaten und
E) einem zur Überführung der Carbonsäuregruppen in Carboxylatgruppen befähigten Neutralisationsmittel,
wobei es sich bei der Carbonsäuregruppen-haltigen, höhermolekularen Polyhydroxylkomponente A) um das Veresterungsprodukt eines Polyetherpolyols a1) des Molekulargewichtsbereichs 400 bis 5000, bevorzugt 500 bis 2000 mit einer Polycarbonsäure a2) handelt, und die Verwendung derartiger Dispersionen als Kaschierklebstoffe.

Die Aufgabe von Kaschierklebstoffen ist die Verbindung feinster Folien aus unterschiedlichen oder gleichen Materialien, wie z.B. Polyethylen, Polypropylen, Polyester, Polyamid, Aluminium, Papier oder Pappe zu Folienverbunden, die vielfältige Anwendungen z.B. zu Verpackungszwecken oder zu Dekorationszwecken finden. Dabei wird erwartet, daß ein geeigneter Kaschierklebstoff auf einer Vielzahl von Substraten ausgezeichnet Verbundfestigkeiten bei geringem Klebstoffauftrag gewährleistet.

Weiterhin muß ein geeigneter Kaschierklebstoff wirtschaftlich verarbeitbar sein, d.h. auf den heute üblichen Verarbeitungsmaschinen (z.B. Fa. BILLHÖFER) bei üblichen Verarbeitungsbedingungen, niedrigen Trocknungstemperaturen, hohen Bandgeschwindigkeiten applizierbar sein.

Diese Aufgabe wird gemäß dem Stand der Technik mit lösungsmittelhaltigen Ein- oder Mehrkomponentensystemen gelöst. Die bei der Verarbeitung freigesetzten organischen Lösungsmittel stellen für den Klebstoffverarbeiter ein Problem dar, dem durch kostspielige Absaugevorrichtungen und Rückgewinnungs- oder Verbrennungsanlagen Rechnung getragen werden muß.

Aufgabe der vorliegenden Erfindung war es daher, lösungsmittelfreie, wäßrige Polyurethan-Dispersionen als Kaschierklebstoffe bereitzustellen, die die oben aufgezeigten Nachteile lösungsmittelhaltiger Kaschierklebstoffe vermeiden.

Gegenstand der Erfindung sind wäßrige Polyurethan-Dispersionen auf Basis

A) einer Carbonsäuregruppen-haltigen höhermolekularen Polyhydroxylkomponente,

B) gegebenenfalls einer weiteren höhermolekularen Polyhydroxylkomponente die weitgehend frei von Carbonsäuregruppen ist,

C) gegebenenfalls niedermolekularen Polyhydroxylverbindungen als Kettenverlängerungsmitteln,

D) organischen Polyisocyanaten und

E) einem zur Überführung der Carbonsäuregruppen in Carboxylatgruppen befähigten Neutralisationsmittel,

dadurch gekennzeichnet, daß es sich bei der Carbonsäuregruppen-haltigen, höhermolekularen Polyhydroxylkomponente A) um das Veresterungsprodukt eines Polyetherpolyols a1) des Molekulargewichtsbereichs 400 bis 5000, bevorzugt 500 bis 2000 mit einer Polycarbonsäure a2) handelt, und die Verwendung derartiger Dispersionen als Kaschierklebstoffe.

Es sind eine Reihe von Verfahren zur Herstellung von Polyurethanen, welche Carboxylatgruppen aufweisen, bekannt. So kann man beispielsweise übliche Prepolymere mit endständigen Isocyanatgruppen in einem organischen Lösungsmittel mit wäßrigen Lösungen von Aminocarbonsäuren bzw. deren Salzen zu entsprechenden Carboxylatgruppen aufweisenden Polyurethan-Harnstoffen umsetzen (vgl. z.B. DE-AS 1 495 745, GB-PS 1 076 688, US-PS 3 539 483). Der Nachteil dieses Verfahrens besteht darin, daß der Polymeraufbau nur in Gegenwart von organischen Lösungsmitteln erfolgen kann, die im Endprodukt verbleiben oder aus dem Endprodukt destillativ entfernt werden müssen, was eine Erhöhung der Herstellkosten bedeutet.

Nach einem anderen Verfahren kann man zum Aufbau von Polyurethanen Dimethylolpropionsäure als Kettenverlängerungsmittel einsetzen, wobei die freie Carboxylgruppe überwiegend erhalten bleibt und anschließend neutralisiert werden kann (vgl. z.B. US-PS 3 412 054, DE-OT 1 913 271).

Der Einbau von Dimethylolpropionsäure in Isocyanatprepolymere ist zwar lösungsmittelfrei möglich, jedoch besteht in einer Reihe von Fällen das Problem, die Dimethylolpropionsäure bei den erforderlichen niedrigen Reaktionstemperaturen im Prepolymer zu lösen. Schließlich ist von Nachteil, daß Dimethylolpropionsäure nur über eine Isocyanatreaktion eingebaut werden kann, was verhältnismäßig hohe Viskositäten des so modifizierten NCO-Prepolymeren zur Folge hat.

Aus der Chemie der dispergierbaren Esterharze sind zwar Ester, welche sowohl Hydroxylgruppen als auch freie Carboxylgruppen enthalten, bekannt (vgl. z.B. DE-OS 2 323 546, US-PS 4 029 617, BE-PS 803 346 oder US-PS 3 876 582), jedoch sind in solchen Produkten die reaktiven Gruppen statistisch verteilt, so daß auf Basis dieser bekannten Produkte der Aufbau von strukturell definierten und insbesondere von überwiegend linearen Polyurethanen nicht möglich ist.

Nach einem weiteren bekannten Verfahren werden Polyurethane, welche freie primäre oder sekundäre Amino-Gruppen enthalten, mit β-Propiolacton oder dem Anhydrid einer Dicarbonsäure umgesetzt, wobei eine Modifizierung des Polyurethans mit freien Carboxylgruppen erfolgt (vgl. DT-AS 1 237 306).

Es ist auch schon beschrieben worden, Polyether bzw. Polyester mit endständigen OH-Gruppen und seitenständigen Sulfonat- oder Carboxylatgruppen zum Aufbau von anionischen Polyurethan-Dispersionen einzusetzen (vgl. z.B. DT-AS 1 570 615).

Zur Herstellung von Polyestern mit seitenständigen anionischen Gruppen wurde die Mitverwendung von Diaminen, welche Sulfonat- oder Carboxylatgruppen enthalten, in Betracht gezogen (vgl. z.B. DT-AS 1 570 615).

Auch die Verwendung von Trimellitsäurederivaten zur Einführung von Carbonsäuregruppen in Polyurethane wurde beschrieben (EP 0 000 171) s.a. O. Lorenz et al., Angew. Makromol. Chem. 63 (1977) 11-22. Nach dem beschriebenen Verfahren wird Trimellitsäureanhydrid zunächst mit einem Makroglykol so verestert, daß nur der Anhydridring geöffnet wird. Anschließend werden 50 mol-% der verbleibenden Carbonsäuregruppen in Alkali- oder tert.-Ammoniumsalze überführt und die verbleibenden Carbonsäure- und Hydroxylgurppen durch Reaktion mit Polyisocyanaten in ein Isocyanatprepolymer überführt. Nachteilig an diesem Verfahren ist der hohe Gehalt basischer Gruppen, tert.-Amine bzw. Carbonsäureanionen, in Gegenwart von Isocyanatgruppen. Wie bekannt z.B. E. Müller in Houben-Weyl; Methoden der organischen Chemie, 14/2, S. 82, Georg Thieme Verlag, Stuttgart 1963; J.H. Sanders und K.G. Frisch: Polyurethanes Chemistry and Technology I in High Polymers Vol. XVI, Wiley Interscience, New York 1962; katalysieren derartige basische Gruppen zwar die Reaktion von Isocyanat- mit Hydroxylgruppen von Alkoholen und Carbonsäuren zu Urethan- bzw. Säureamidgruppen aber gleichzeitig auch die Trimerisierungsreaktion von Isocyanaten zu Isocyanursäurederivaten, was zu einem unkontrollierten Anstieg der Funktionalität und damit zur Vergelung des Prepolymers führen kann. Die Verwendung derartiger katalytisch wirksamer Komponenten beinhaltet immer einen Unsicherheitsfaktor bei der Umsetzung von Polyisocyanaten im technisch relevanten Maßstab.

Bei den erfindungsgemäß eingesetzten höhermolekularen, Carbonsäuregruppen-haltigen Polyhydroxylkomponenten A) handelt es sich um Veresterungsprodukte von höhermolekularen Polyoxyalkylenpolyolen a1) mit Polycarbonsäuren a2) mit einer Säurezahl (SZ) zwischen 10 und 80, bevorzugt zwischen 25 und 65 und einer Hydroxylzahl (OHZ) von 25 bis 200, bevorzugt von 45 bis 120. Als Polyoxyalkylenpolyole a1) werden bevorzugt die Polymerisationsprodukte des Ethylenoxids, Propylenoxids, Butylenoxids sowie deren Misch- und Pfropfpolymerisate sowie die durch Kondensation von mehrwertigen Alkoholen oder Mischungen derselben und die durch Kondensation von mehrwertigen Alkoholen oder Mischungen derselben und die durch Alkoxylierung von mehrwertigen Alkoholen, Aminen oder Aminoalkoholen gewonnenen Polyether eingesetzt, besonders bevorzugt sind Homo- und/oder Mischpolymerisate von Ethylenoxid und/oder Propylenoxid des Molekulargewichtsbereich 400 bis 2000 mit einer mittleren Funktionalität von 2 bis 3. Als Polycarbonsäuren a2) werden bevorzugt aliphatische oder aromatische Di- und/oder Tricarbonsäuren oder deren Anhydride wie z.B. Oxal-, Bernstein-, Adipin-, Suberin-, Azelain-, Sebacin-, Dodecandicarbon-, o-Phthal-, Terephthal- oder Isophthalsäure sowie Tricarbonsäuren wie z.B. Trimellit- oder Trimesinsäure eingesetzt.

Als gegebenenfalls mitzuverwendende, höhermolekulare Polyhydroxylkomponente B) können die aus der Polyurethanchemie an sich bekannten Polyhydroxylkomponenten aus den Klassen der Polyoxyalkylen-, Polyester-, Polylacton- oder Polycarbonatpolyole Verwendung finden. Bevorzugte mitzuverwendende Polyhydroxylkomponenten B) sind Homo- und/oder Mischpolymerisate von Ethylenoxid und/oder Propylenoxid des Molekulargewichtsbereichs 400 bis 5000, bevorzugt von 1000 bis 3000 mit einer mittleren Funktionalität von 2 bis 3. Weitere bevorzugt mitzuverwendende Polyhydroxylkomponenten B) sind Polyesterpolyole, insbesondere lineare Polyesterdiole oder auch schwach verzweigte Polyesterpolyole des Molekulargewichtsbereichs 400 bis 5000, bevorzugt 1000 bis 3000, wie sie in bekannter Weise aus aliphatischen, cycloaliphatischen oder aromatischen Dicarbonsäuren wie z.B. Bernstein-, Adipin-, Suberin-, Azelain-, Sebazin-, O-Phthal-, Terephthal-, Isophthal- oder Hexahydro-phthalsäure oder deren Gemische und mehrwertigen, insbesondere zweiwertigen Alkoholen wie z.B. Ethylenglykol, Diethylenglykol, 1,4-Butandiol, 1,6-Hexandiol, 1,8-Octandiol, Neopentylglykol oder deren Gemische sowie unter Mitverwendung geringer Mengen an höher funktionellen Polyolen, wie Trimethylolpropan oder Glycerin hergestellt werden können. Als mehrwertige Alkohole kommen natürlich auch cycloaliphatische und/oder aromatische Di- und Polyhydroxylverbindungen in Frage. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden.

Bei den beim erfindungsgemäßen Verfahren gegebenenfalls mitzuverwendenden Aufbaukomponenten C) handelt es sich um vorzugsweise 2- bis 3-wertige, insbesondere 2-wertige Polyhdroxylverbindungen des Molekulargewichtsbereichs kleiner 400, vorzugsweise 62 bis 250. Zu den Vertretern der gegebenenfalls mitzuverwendenden niedermolekularen Polyhydroxylverbindungen C) gehören beispielsweise einfache, mehrwertige Alkohole wie Ethylenglykol, Propylenglykol, 1,3-Propandiol, 1,4-Butandiol, 1,6-Hexandiol, Trimethylolpropan oder Glycerin. Auch niedermolekulare Polyesterdiole wie z.B. Adipinsäure-bis-(hydroxyethyl)-ester oder niedermolekulare, Ethergruppen aufweisende Diole wie z.B. Diethylenglykol, Triethylenglykol, Tetraethylenglykol, Dipropylenglykol, Tripropylenglykol oder Tetrapropylenglykol können gegebenenfalls als Komponente C) mitverwendet werden.

Als Polyisocyanatkomponente D) seien beispielhaft genannt: Aliphatische, cycloaliphatische, araliphatische und aromatische Polyisocyanate, wie sie z.B. von W. Siefken in Justus Liebigs Annalen der Chemie, 562, S. 75-136 beschrieben werden. Bevorzugt sind aliphatische, cycloaliphatische oder araliphatische Diisocyanate, wie z.B. 1,6-Hexamethylendiisocyanat, 1,4-Diisocyanato-cyclohexan, 1-Isocyanato-3,3,5-trimethyl-5-isocyanatomethyl-cyclohexan (Isophorondiisocyanat), 4,4'-Diisocyanato-dicyclohexyl-methan und Xylylendiisocyanat oder aromatische Diisocyanate wie z.B. die Isomeren des Toluylendiisocyanats oder die Isomeren des Diphenylmethan-diisocyanats.

Als erfindungsgemäße Neutralisationsmittel E) kommen vorzugsweise tertiäre Amine wie z.B. Triethylamin, Tri-n-butylamin oder Trisisopropanolamin zum Einsatz. Ein weiteres bevorzugtes Neutralisationsmittel D) ist Ammoniak. Ebenfalls erfindungsgemäße Neutralisationsmittel D) sind anorganische Basen wie z.B. Alkalihydroxide z.B. Natrium- oder Kaliumhydroxid, oder Alkalicarbonate oder -Hydrogencarbonate.

Weiterhin können den erfindungsgemäßen Kaschierklebstoff-Dispersionen die aus der Klebstoffverarbeitung bekannten Zuschlagstoffe wie z.B. Verlaufshilfsmittel, Entschäumer, Viskositätsregulatoren, Vernetzungsmittel, Katalysatoren etc. zugesetzt werden.

Die Herstellung der wäßrigen Polyurethan-Dispersionen erfolgt im allgemeinen derart, daß aus den isocyanatreaktiven Komponenten A bis C und der Isocyanatkomponente D nach bekannten Verfahren der Polyurethanchemie ein Isocyanat-endständiges Prepolymer hergestellt wird, welches anschließend entweder in Masse oder unter Mitverwendung eines Lösungsmittels mit dem Neutralisationsmittel E ionifiziert wird und anschließend durch Zugabe von Wasser in eine wäßrige Dispersion überführt wird. Als mitzuverwendende Hilfslösungsmittel kommen insbesondere niedrig siedende, wassermischbare Lösungsmittel wie z.B. Ketone oder cyclische Ether wie z.B. Aceton, Methylethylketon, Tetrahydrofuran oder Dioxan, die sich leicht durch Vakuumdestillation aus der wäßrigen Dispersion entfernen lassen in Betracht. Natürlich können auch höher siedende Lösungsmittel, die in der wäßrigen Dispersion als Kosolventien verbleiben, als Hilfslösungsmittel Verwendung finden. Weiterhin ist es natürlich auch möglich das Neutralisationsmittel E in Form einer wäßrigen Lösung einsetzen, wobei besonders vorteilhaft gleichzeitig die Dispergierung zur wäßrigen Polyruethan-Dispersion durchgeführt wird.

Die folgenden Beispiele sollen zur Erläuterung des erfindungsgemäßen Verfahrens dienen, sie bedeuten keinesfalls eine Einschränkung.

Die Bestimmung der mittleren Teilchengrößen der Polyurethan-Dispersonen erfolgte mittels Laserkorrelations-Spektroskopie (Gerät: Malvern Autosizer II, Malvern Inst. Limited).

Die angegebenen Viskositäten verstehen sich als Auslaufzeiten gemessen gemäß DIN 53 211 im DIN-Becher 4 mm.

Der Gegenstand der Erfindung soll anhand der folgenden Beispiele noch näher erläutert werden.

Beispiele 1-3

In einem heizbaren Reaktionsgefäß mit Rührer und Stickstoffeinlaß werden entsprechende Mengen eines Polypropylenoxidpolyols I entsprechend Tabelle 1 vorgelegt und unter einem konstanten, schwachen Stickstoffstrom auf 100°C erwärmt. Entsprechend Tabelle 1 wird Polycarbonsäureanhydrid II zugegeben und anschließend auf 150°C erhitzt. Die Veresterung wird unter langsamer Temperatursteigerung bis 200°C fortgesetzt, bis die gewünschte Säurezahl (SZ, Tabelle 1) erreicht ist.

| Bei-spiel | Polypropylen-oxidpolyol I | | | | Polycarbonsäure-anhydrid II | | Esterdiol | |
|---|---|---|---|---|---|---|---|---|
| | Funktio-nalität | OHZ | <g> | | <g> | | SZ | OHZ |
| 1 | 2 | 112 | 2000 | | Trimellitsäure 192 | | 23-27 | 55-60 |
| 2 | 2 | 265 | 859 | | Trimellitsäure 384 | | 50-55 | 110-120 |
| 3 | 3 | 355 | 950 | | o-Phthalsäure 296 | | 85-90 | 170-180 |

Beispiel 4

200 g Esterdiol gemäß Beispiel 1 (OHZ = 58) werden mit 29,5 g Hexamethylendiisocyanat bei 40°C zur Reaktion gebracht. Nach 3,5 h beträgt der Isocyanatgehalt 2,84 %. Es werden 8,7 g Triethylamin eingearbeitet und anschließend mit 535 g entionisiertem Wasser dispergiert. Man erhält eine feinteilige, stabile Dispersion mit folgenden Daten:

| Feststoff: | 32 Gew.-% |
|---|---|
| Viskosität (DIN 4 mm): | 12 <s> |
| Teilchengröße: | 180 <nm> |

### Beispiel 5

217,0 g Esterdiol gemäß Beispiel 1 (OHZ = 58) und 1,8 g Butandiol-1,4 werden mit 23,5 g Hexamethylendiisocyanat und 12,5 g 4,4'-Diphenylmethandiisocyanat bei 40°C zur Reaktion gebracht. Nach 2 h ist ein konstanter Isocyanatgehalt von 2,29 % erreicht. Es werden 14,0 g Trisisopropanolamin eingearbeitet und anschließend mit 615 g entionisiertem Wasser dispergiert. Man erhält eine feinteilige, stabile Dispersion mit folgenden Daten:

| Feststoff: | 31 Gew.-% |
|---|---|
| Viskosität (DIN 4 nm) : | 25 <s> |
| Teilchengröße: | 95 <nm> |

### Beispiel 6

211,0 g Esterdiol gemäß Beispiel 2 (OHZ = 119) werden mit 60,5 g Hexamethylendiisocyanat bei 50°C zur Reaktion gebracht. Nach 4 h ist ein konstanter Isocyanatgehalt von 4,25 % erreicht. Es werden 16,0 g Trisisropropanolamin eingearbeitet und anschließend mit 635 g entionisiertem Wasser dispergiert. Man erhält eine feinteilige, stabile Dispersion mit folgenden Daten:

| Feststoff: | 32 Gew.-% |
|---|---|
| Viskosität (DIN 4 mm) : | 17 <s> |
| Teilchengröße: | 160 <nm> |

### Beispiel 7

200,0 g eines linearen Polypropylenoxiddiols (OHZ = 56) und 105,5 g Esterdiol gemäß Beispiel 2 (OHZ = 119) werden mit 60,5 g Hexamethylendiisocyanat bei 70°C zur Reaktion gebracht. Nach 5 h ist ein konstanter Isocyanatgehalt von 3,27% erreicht. Es werden 18,1 g Trisisopropanolamin eingearbeitet und anschließend mit 855 g entionisiertem Wasser dispergiert. Man erhält eine feinteilige, stabile Dispersion mit folgenden Daten:

| Feststoff: | 32 Gew.-% |
|---|---|
| Viskosität (DIN 4 mm) : | 17 <s> |
| Teilchengröße: | 160 <nm> |

### Beispiel 8 (Anwendungsbeipiel)

Auf einer üblichen Kaschiermaschine wird ein lackierter Karton (Chromolux Color 77 (schwarz) bzw. 48 (weiß), Fa. Zander) gegen biaxial orientierte Polypropylenfolie (BOPP-Walothen 015 AZ, Fa. Wolff-Walsrode) unter üblichen Verarbeitungsbedingungen kaschiert. Als Kaschierklebstoff wird eine Dispersion gemäß Beispiel 5 eingesetzt.

| 1. Bedingungen | | | | |
|---|---|---|---|---|
| | Kaschierwalze | Trockenwalze | Kaschiergeschw. | Karton Chromolux-Color |
| a) | 45 °C | 55 °C | 15m/min | 77 |
| b) | 60 °C | 55 °C | 20m/min | 77 |
| c) | 70 °C | 55 °C | 20m/min | 48 |

| 2. Auswertung | | | |
|---|---|---|---|
| | Auftragsmenge [g/m$^2$] | Schälfestigkeit[*] [N/15min] | Glanz[**] 20°/60°/80° |
| a) | <2 | 2,3 | 70/90/95 % |
| b) | <1,5 | 2,4 | 60/90/95 % |
| c) | <1,5 | 3,5 | 70/90/95 % |

[*] T-Schälversuch in Anlehnung an DIN 53 273
Abzugswinkel: 180[°]
Abzugsgeschwindigkeit: 100 [mm/min]
Abzugsstrecke: 100 [mm]
[**] Glanzmeßgerät: Laborreflektormeter RL, Fa. Lange GmbH, Berlin, Meßwinkel: 20°,60°,80°

Es werden Verbunde erhalten, die bei extrem niedrigen Klebstoffauftrag eine gute Verbundhaftung und einen hohen Glanz zeigen.

**Patentansprüche**

1. Wäßrige Polyurethan-Dispersionen auf Basis
   A) einer Carbonsäuregruppen-haltigen höhermolekularen Polyhydroxylkomponente,
   B) gegebenenfalls einer weiteren höhermolekularen Polyhydroxylkomponente die weitgehend frei von Carbonsäuregruppen ist,
   C) gegebenenfalls niedermolekularen Polyhydroxylverbindungen als Kettenverlängerungsmitteln,
   D) organischen Polyisocyanaten und
   E) einem zur Überführung der Carbonsäuregruppen in Carboxylatgruppen befähigten Neutralisationsmittel,
   dadurch gekennzeichnet, daß es sich bei der Carbonsäuregruppen-haltigen, höhermolekularen Polyhydroxylkomponente A) um das Veresterungsprodukt eines Polyetherpolyols a1) des Molekulargewichtsbereichs 400 bis 5000, bevorzugt 500 bis 2000 mit einer Polycarbonsäure a2) handelt, und die Verwendung derartiger Dispersionen als Kaschierklebstoffe.

2. Wäßrige Polyurethan-Dispersionen nach Anspruch 1 dadurch gekenneichnet, daß die Carbonsäuregruppen-haltige Komponente A) eine Säurezahl zwischen 10 und 80, bevorzugt zwischen 25 und 65 und eine Hydroxylzahl von 25 bis 200, bevorzugt 45 bis 120 hat.

3. Wäßrige Polyurethan-Dispersionen nach einem der vorhergehenden Ansprüche, dadurch gekennzeichnet, daß es sich bei der Aufbaukomponente a1) um Polyoxyalkylenpolyole auf Basis von Ethylenoxid und/oder Propylenoxid, bevorzugt auf Basis Propylenoxid mit einer Funktionalität zwischen 2 und 3 handelt.

4. Wäßrige Polyurethan-Dispersionen nach einem der vorhergehenden Ansprüche dadurch gekennzeichnet, daß als Aufbaukomponente a2) Trimellitsäure oder Trimellitsäureanhydrid verwendet wird.

5. Wäßrige Polyurethan-Dispersionen nach einem der vorhergehenden Ansprüche, dadurch gekennzeichnet, daß als Aufbankomponente a2) o-Phthalsäure oder o-Phthalsäureanhydrid verwendet wird.

6. Wäßrige Polyurethan-Dispersion nach einem der vorhergehenden Ansprüche, dadurch gekennzeichnet, daß als gegebenenfalls mitzuverwendende Komponente B) Polyhydroxylverbindungen mit einer mittleren Funktionalität von 2 bis 3, bevorzugt 2 bis 2,5 mit einem mittleren Molekulargewicht von 500 bis 5000, bevorzugt von 1000 bis 3000 eingesetzt wird.

7. Wäßrige Polyurethan-Dispersion nach einem der vorhergehenden Ansprüche, dadurch gekennzeichnet, daß als gegebenenfalls mitzuverwendenden Komponente B) Mischungen aus

b1) 30 bis 100 Gew.-% eines Polyoxyalkylenpolyol mit einer Funktionalität von 2 bis 3 und einem Molgewicht zwischen 500 und 5000, bevorzugt zwischen 1000 und 3000 und

b2) 0 bis 70 Gew.-% einer linearen Dihydroxylverbindung aus der Klasse der Polyester-, Polyaceton- oder Polycarbonatdiole mit einem mittleren Molekulargewicht von 1000 bis 5000, bevorzugt von 1500 und 3000 eingesetzt werden.

8. Wäßrige Polyurethandispersionen nach einem der vorhergehenden Ansprüche mit einem Gehalt von 10 bis 50, bevorzugt 15 bis 40 Milliäquivalenten pro 100 g Feststoff an Carboxylatgruppen sowie gegebenenfalls 0 bis 15 Gew.-%, bevorzugt 0 bis 10 Gew.-% an in Form von Polyetherketten vorliegenden Ethylenoxideinheiten.

9. Verwendung von wäßrigen Polyurethan-Dispersionen nach einem der vorhergehenden Ansprüche zur Verklebung von flächigen Materialien oder Werkstücken wie Pappe, Papier, Kunststoff- oder Metallfolien miteinander.

10. Verbunde, die unter Mitverwendung eines wäßrigen Klebstoff gemäß Ansprüchen 1 bis 7 hergestellt werden.